# EUROPÄISCHE PATENTSCHRIFT

(11) **EP 1 199 497 B1**
(45) Veröffentlichungstag und Bekanntmachung des Hinweises auf die Patenterteilung: **03.11.2010**
(21) Anmeldenummer: 01119388.5
(22) Anmeldetag: 11.08.2001
(51) Int. Cl.: F16H 59/02, F16H 59/48

(54) **Vorrichtung und Verfahren zum Steuern eines selbsttätig schaltenden Getriebes**
Method and device for controlling an automated gearbox
Méthode et dispositif de commande d'une boîte de vitesses automatisée

(30) Priorität: 20.10.2000 DE 10052880
(43) Veröffentlichungstag der Anmeldung: 24.04.2002
(73) Patentinhaber: Dr. Ing. h.c. F. Porsche AG, 70435 Stuttgart (DE)
(72) Erfinder: Seidel, Willi, 71735 Eberdingen (DE); Petersmann, Josef, 71299 Wimsheim (DE)

(56) Entgegenhaltungen:
- DE-A1- 4 311 886
- DE-A1- 19 736 406
- DE-A1- 19 912 963

## Beschreibung

Die Erfindung betrifft eine Vorrichtung und ein Verfahren zum Steuern eines selbsttätig schaltenden Getriebes nach den Gattungen der unabhängigen Ansprüche.

Um dem Fahrer eines Fahrzeuges in besonderen Situationen auch bei selbsttätig schaltenden Getrieben die Möglichkeit der direkten Beeinflussung der gewählten Übersetzung zu geben, ist es aus der DE-Z "Automobiltechnische Zeitschrift" Nr. 92, Heft 6/1990, Seite 308 bis 319 bekannt, neben einem Automatikbetrieb einen Manuellbetrieb vorzusehen, in dem der Fahrer einzelne Gänge des Stufenautomaten direkt anwählen kann. Zu diesem Zweck ist parallel zu einer Schaltgasse für den Automatikbetrieb eine zweite Schaltgasse für den manuellen Betrieb vorgesehen, in der der Fahrer durch eine wippenartige Bewegung eines Schalthebels jeweils eine Rück- oder Hochschaltung um einen Gang veranlassen kann. Eine ähnliche Vorrichtung für stufenlose Getriebe ist aus der CH-Z "Automobil Revue" Heft 51/1992, Seite 23, bekannt.

Darüber hinaus ist es bekannt, Gangwechsel in einem fremdkraftbetätigten Getriebe durch eine Wähleinrichtung von einem Lenkrad eines Fahrzeuges aus zu veranlassen (beispielsweise DE-Z "Auto Motor Sport" Heft 22/1991, Seite 300).

Außerdem ist aus der DE 43 11 886 A1 eine Vorrichtung und ein Verfahren zum Steuern eines selbsttätig schaltenden Getriebes bekannt, bei der die Steuerung von einer automatischen Betriebsart in eine manuelle Betriebsart wechselt, wenn mit einem Fahrstufenschalter eine Stellung M angetippt wird oder wenn mittels einer im Lenkrad vorgesehenen Schaltwippe für einen vorgegebenen Zeitraum, beispielsweise 0,7 sec, ein Schaltsignal abgegeben wird. Die manuelle Betriebsart wird wieder verlassen, wenn mit dem Fahrstufenschalter eine Stellung M erneut angetippt wird oder für einen vorgegebenen Zeitraum, beispielsweise 1,5 sec, ein Hochschaltsignal gegeben wird. Schließlich kann ein Verlassen der vom Fahrer beeinflussten Betriebsart vorgesehen sein, wenn diese Betriebsart über einen vorgegebenen Zeitraum aktiv war. Insgesamt handelt es sich jedoch stets um eine Umschaltung von der automatischen in die manuelle Betriebsart und umgekehrt.

Aus der gattungsbildenden DE 199 12 963 A1 ist bereits eine Vorrichtung und ein Verfahren zum Steuern eines selbsttätig schaltenden Getriebes bekannt, bei der die Steuerung von der in einer Stellung D eines Fahrstufenschalters normalerweise gewählten automatischen Betriebsart ohne Auswahl durch die erste Wähleinrichtung zeitweise in die vom Fahrer beeinflusste Betriebsart wechselt, wenn eine zweite am Lenkrad angeordnete Schaltwippe betätigt wird. Hiermit wird die automatischen Betriebsart nicht dauerhaft verlassen, denn nach Ablauf einer vorgegebenen ersten Zeitdauer wird wieder die automatische Betriebsart aktiv. Die Zeitdauer beginnt mit jeder Betätigung der Schaltwippe von neuem zu laufen. Eine selbsttätige Rückkehr in die automatische Betriebsart ist nur dann möglich, wenn die aktuelle Querbeschleunigung unterhalb eines vorgegebenen Grenzwertes liegt und gleichzeitig Zugbetrieb herrscht.

Schließlich ist aus der DE 197 36 406 A1 eine Einrichtung zum Steuern eines automatischen Getriebes für Kraftfahrzeuge bekannt geworden, bei der die Steuerung von einer automatischen Betriebsart in eine manuelle Betriebsart wechseln kann, ohne dass die Schaltgasse für den Automatikmodus verlassen werden muss. Die Rückkehr in die automatische Betriebsart soll automatisch dann erfolgen, wenn in der manuellen Betriebsart Situationen erkannt werden, in denen eine selbsttätige Steuerung des Getriebes wünschenswert ist. Solche Situationen können z.B. das Überschreiten von Drehzahlgrenzen, der Ablauf einer vorgegebenen Zeitdauer seit dem letzten manuellen Schaltvorgang, lang anhaltendes oder häufiges Bremsen, das Erreichen von fahrdynamischen Grenzsituationen, das Erkennen einer Kick-down-Situation oder von externen Ereignissen, die die Aufmerksamkeit des Fahrers beanspruchen, sein.

Es ist Aufgabe der Erfindung, eine Vorrichtung und ein Verfahren zu schaffen, das hinsichtlich seiner Fahrbarkeit weiter verbessert ist.

Dies Aufgabe wird erfindungsgemäß mit den Merkmalen der unabhängigen Ansprüche gelöst. Es wird vorgeschlagen, dass dann, wenn nach einer Anwahl der zweiten, vom Fahrer beeinflussten Betriebart die vorgegebene erste Zeitdauer verstrichen ist, ein Zeitraum für den weiteren Verbleib in der zweiten Betriebsart auf einen Mindestwert gesetzt wird, sobald keine der Bedingungen, bei deren Vorliegen eine Rückkehr in die automatische Betriebsart unterdrückt wird, weiter vorliegt. In vorteilhafter Weise ist hiermit erreicht, dass nach Wegfallen aller der genannten Bedingungen nicht unmittelbar eine Rückkehr in die automatische Betriebsart erfolgt, sondern eine Mindest-Verweildauer in der manuellen Betriebsart gewährleistet ist. Der Erfindung liegt dabei die Erkenntnis zu Grunde, dass die Fahrzustände, die auch nach Ablauf der vorgegebenen Zeitdauer in der manuellen Betriebsart zu einem weiteren Verbleib in der manuellen Betriebsart führen, kurzzeitig unterbrochen werden können, ohne dass hiermit gleichzeitig eine Notwendigkeit für den Wechsel in die automatische Betriebsart gegeben wäre. Insgesamt wird das Schaltverhalten des Getriebes und insbesondere die Wahl seiner Betriebsart damit für den Fahrer hinsichtlich der Vorhersehbarkeit und der Überschaubarkeit verbessert. Die Art der genannten Bedingungen für eine Rückkehr in die automatische Betriebsart ist hier nicht von Bedeutung, solange diese Bedingungen besondere Fahrzustände anzeigen.

Der Wert für die Mindest-Verweildauer soll vorzugsweise im Bereich von 25% der Zeitdauer für die manuelle Betriebsart liegen.

Die Verfahrensansprüche teilen die Wirkungen und Vorteile der entsprechenden Vorrichtungsansprüche.

Die Erfindung ist nachstehend anhand eines in den Zeichnungen dargestellten Ausführungsbeispieles beschrieben. Es zeigen:
- Fig. 1: eine erfindungsgemäße Steuervorrichtung,
- Fig. 2: eine Umschalteinrichtung der Steuervorrichtung und
- Fig. 3: ein Flussdiagramm des erfindungsgemäßen Verfahrens.

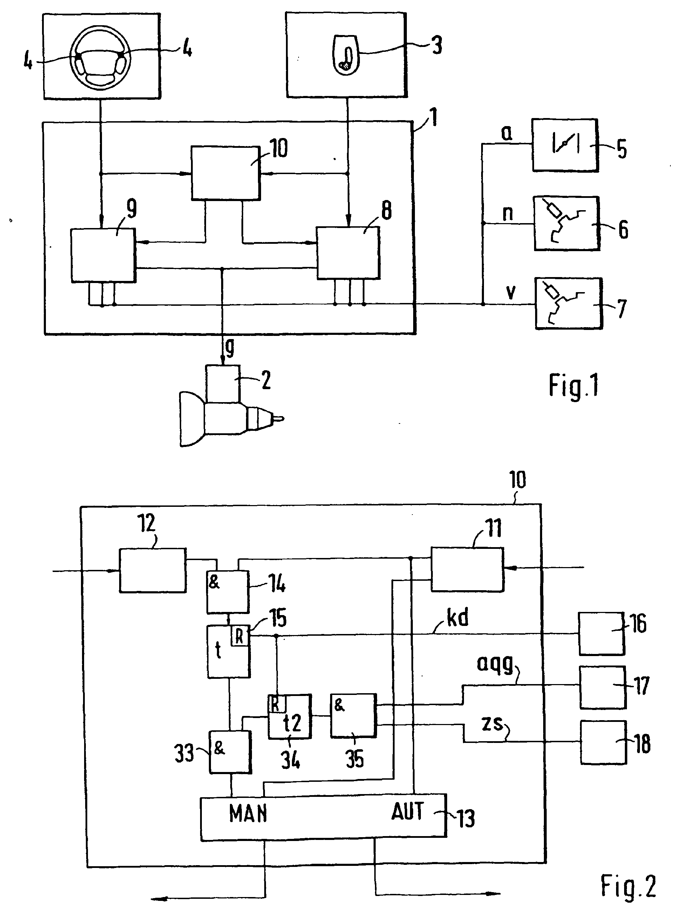

Eine in Fig. 1 gezeigte Steuervorrichtung 1 steuert ein automatisches Getriebe 2 und erhält Signale von einem Fahrstufenschalter 3, einer an einem Lenkrad angeordneten Schaltwippe 4 sowie einem Drosselklappengeber 5, einem Motordrehzahlgeber 6 und einem Fahrgeschwindigkeitsgeber 7.

Das automatische Getriebe 2 erhält von der Steuervorrichtung 1 ein Gangsignal g und legt den mit dem Gangsignal g angeforderten Getriebegang ein. Der Fahrstufenschalter 3 weist eine erste Gasse zur Bedienung einer ersten, automatischen Betriebsart mit den Stellungen und Fahrstufen P, R, N, D, 3, 2, 1 auf. In der Stellung P ist das Getriebe zum Abstellen des Fahrzeuges ausgangsseitig blockiert. In der Stellung R ist ein Rückwärtsgang eingelegt. In der Stellung N ist kein Gang eingelegt. In der Stellung D wird der einzulegende Getriebegang g aus Betriebsparametern des Fahrzeuges bestimmt. Die Stellungen 3, 2 und 1 entsprechen der Stellung D, wobei jedoch der höchste einzulegende Getriebegang g durch die Stellung des Fahrstufenschalters 3 bestimmt ist. Die Stellungen 3, 2 und 1 sind optional.

Ausgehend von dieser ersten Gasse ist gegenüberliegend der Stufenstellung D eine mit M bezeichnete Ausnehmung vorgesehen. Ein als Bedienelement des Fahrschalters 3 vorgesehener Wählhebel rastet in allen Stellungen ein. Die Schaltwippe 4 ist so am Lenkrad angeordnet, dass sie im Griffbereich des Fahrers liegt und weist neben einer neutralen Mittelstellung zwei Schaltstellungen HS und RS auf, aus denen sie nach Betätigung wieder selbsttätig in die neutrale Mittelstellung zurückkehrt. Die beiden Schaltstellungen lösen ein entsprechendes Hochschaltsignal HS bzw. ein Rückschaltsignal RS aus. Der Drosselklappengeber 5 liefert der Steuervorrichtung 1 ein Drosselklappensignal a, der Motordrehzahlgeber 6 ein Motordrehzahlsignal n und der Fahrgeschwindigkeitsgeber 7 ein Fahrgeschwindigkeitssignal v.

Die Steuervorrichtung 1 weist eine erste Übersetzungsbestimmungseinrichtung 8 für die erste, automatische Betriebsart und eine zweite Übersetzungsbestimmungseinrichtung 9 für die zweite, vom Fahrer beeinflusste Betriebsart sowie eine Unterscheidungseinrichtung 10 auf. Die erste Übersetzungsbestimmungseinrichtung 8 erhält die Signale des Fahrstufenschalters 3 und bestimmt hieraus, abhängig von den Betriebsgrößen Drosselklappensignal a, Motordrehzahlsignal n und Fahrgeschwindigkeitssignal v die einzulegende Gangstufe, die sie dann in Form des Gangstufensignals g an das Getriebe 2 weitergibt. Die zweite Übersetzungsbestimmungseinrichtung 9 empfängt die Schaltsignale HS/RS der Schaltwippe 4 und erzeugt hieraus das Gangstufensignal g, wobei die Betriebsgrößen Drosselklappensignal a, Motordrehzahlsignal n, Fahrgeschwindigkeitssignal v für Plausibilitätsprüfungen und Sicherheitsmaßnahmen wie Überdrehschutz, Abwürgeschutz und ähnliches herangezogen werden. Das Gangstufensignal g wird erst mit der abfallenden Flanke des Schaltsignales HS/RS, d.h. beim Loslassen der Schaltwippe 4, abgegeben.

Die Unterscheidungseinrichtung 10 wertet die Signale des Fahrstufenschalters 3 und der Schaltwippe 4 aus und bestimmt hiernach, ob die erste Übersetzungsbestimmungseinrichtung 8 oder die zweite Übersetzungsbestimmungseinrichtung 9 aktiviert wird.

Der Aufbau der Unterscheidungseinrichtung 10 ist in Fig. 2 beschrieben. Eine erste Signalauswerteeinrichtung 11 ist mit dem Fahrstufenschalter 3 und eine zweite Signalauswerteeinrichtung 12 mit der Schaltwippe 4 verbunden. Die Ausgangssignale der Signalauswerteeinrichtungen 11, 12 sind zu einer Umschalteinrichtung 13 geführt, die ihrerseits entweder die erste Übersetzungsbestimmungseinrichtung 8 oder die zweite Übersetzungsbestimmungseinrichtung 9, jedoch nie beide gleichzeitig, aktiviert. Hierzu sind an der Umschalteinrichtung 13 ein Eingang AUT und ein Eingang MAN vorgesehen. Ein Signal am Eingang AUT veranlasst die Umschalteinrichtung, die erste Übersetzungsbestimmungseinrichtung 8 zu aktivieren und damit die automatische Betriebsart zu wählen. Ein Signal am Eingang MAN aktiviert die zweite Übersetzungsbestimmungseinrichtung 9 und wählt die vom Fahrer (mittels der Schaltwippe 4) beeinflusste Betriebsart. Beide Eingänge MAN und AUT können mehrere Signale aufnehmen und diese auch ggf. logisch miteinander verknüpfen.

Die erste Signalauswerteeinrichtung 11 erkennt aus der Auswertung des Signals des Fahrstufenschalters 3, ob sich dieser in der Stellung M befindet. Ist dies der Fall, so gibt sie ein Signal auf den Eingang MAN der Umschalteinrichtung 13, so dass nun die vom Fahrer beeinflusste Betriebsart gewählt ist. Erkennt die erste Signalauswerteein-richtungll, dass sich der Fahrstufenschalter 3 nicht mehr in der Stellung M befindet, so gibt sie ein Signal auf den Eingang AUT der Umschalteinrichtung 13 und wählt damit die automatische Betriebsart. Insgesamt wird durch die Umschalteinrichtung 13 die erste Übersetzungsbestimmungseinrichtung 8 aktiviert, solange sich der Fahrstufenschalter 3 in der Stellung D befindet, und die zweite Übersetzungsbestimmungseinrichtung 9 aktiviert, solange sich der Fahrstufenschalter 3 in der Stellung M befindet.

Die zweite Signalauswerteeinrichtung 12 wertet das Signal der Schaltwippe 4 dahingehend aus, dass sie prüft, ob ein Hochschaltsignal HS oder ein Rückschaltsignal RS anliegt. Ist dies der Fall, so wird an ein UND-Glied 14 ein Signal abgegeben. Der andere Eingang des UND-Gliedes 14 ist mit einem Ausgang der ersten Signalerkennungseinrichtung 11 verbunden, der ein Signal abgibt, wenn sich der Fahrstufenschalter 3 in der Stellung D befindet.

Der Ausgang des UND-Gliedes 14 ist auf ein Verzögerungsglied 15 geführt, das eine Ausschaltverzögerung mit programmierbarer Dauer t beinhaltet. Der Ausgang des Verzögerungsgliedes 15 ist mit dem Eingang MAN der Umschalteinrichtung 13 verbunden. Das Verzögerungsglied 15 erhält an einem Reset-Eingang R ferner ein Signal kd eines Kick-down-Schalters 16. Liegt ein solches Signal kd am Verzögerungsglied 15 an, so wird das Verzögerungsglied 15 unmittelbar zurückgesetzt und gibt kein Signal mehr ab.

Zwischen dem Verzögerungsglied 15 und dem Eingang MAN der Umschalteinrichtung 13 ist ein UND-Glied 33 vorgesehen, dessen zweiter Eingang ein Signal von einem zweiten Verzögerungsglied 34 erhält, dass eine Ausschaltverzögerung mit der programmierbaren Dauer t2 beinhaltet. Das zweite Verzögerungsglied 34 erhält das Signal eines UND-Gliedes 35, das die Signale aqg eines Querbeschleunigungs-Grenzwertgebers 17 und zs eines Zug-Schub-Detektors 18 miteinander verknüpft. Der Querbeschleunigungs-Grenzwertgebers 17 gibt dabei das Signal aqg ab, wenn der Betrag der Querbeschleunigung einen voreingestellten Wert aqmax überschreitet. Der Zug-Schub-Detektors 18 gibt das Signal zs ab, wenn Schubbetrieb herrscht. Die Dauer t2 ist hier in der Größe von 25% der Dauer t des Verzögerungsgliedes 15 gewählt. Auch das zweite Verzögerungsglied 34 erhält an einem Reset-Eingang R ein Signal kd eines Kick-down-Schalters 16.

Anstelle einer Verarbeitung in den UND-Gliedern 14, 33 und 35 sowie den Verzögerungsgliedern 15 und 34 kann mit gleicher Wirkung die vorbeschriebene Verarbeitung des Schaltsignals HS/RS, des Signals D des Fahrstufenschalters 3 sowie der Signale kd, aqg und zs auch in der Umschalteinrichtung 13 erfolgen.

Die beschriebene Vorrichtung wirkt wie folgt: Zunächst wird das Fahrzeug in der automatischen Betriebsart betrieben, d.h. der einzulegende Getriebegang wird selbsttätig aus den Betriebsgrößen des Fahrzeuges bestimmt und eingestellt. Wünscht nun der Fahrer den Wechsel in die zweite, von ihm beeinflusste Betriebsart, so bewegt er den Fahrstufenschalter 3 aus der Stellung D in die Stellung M. Nun kann der Fahrer über die Schaltwippe 4 im Lenkrad Hochschaltungen oder Rückschaltungen auslösen, indem er die Schaltwippe im Sinne einer Hochschaltung oder im Sinne einer Rückschaltung betätigt. Erreicht das Fahrzeug für die Steuerung erkennbare Betriebsgrenzen (Überdrehen, Abwürgen o.ä.) für den gerade eingelegten Getriebegang, so wird auch ohne Schaltbefehl des Fahrers eine Schaltung ausgelöst, um das Fahrzeug wieder in die zulässigen Betriebsgrenzen zu bringen.

Alternativ hierzu kann der Fahrer kurzzeitig in die zweite, von ihm beeinflusste Betriebsart gelangen, indem er in der Stellung D des Fahrstufenschalters 3 eine Hoch- oder eine Rückschaltung über die Schaltwippe 4 anfordert. In diesem Fall wird, neben dem Wechsel in die zweite Betriebsart, anschließend an den Wechsel die angeforderte Schaltung durchgeführt, weil das Signal der Schaltwippe 4 an der zweiten Übersetzungsbestimmungseinrichtung 9 ansteht (Auslösung des Gangstufensignals g mit der negativen Flanke der Schaltsignale HS/RS).

Die erste, automatische Betriebsart wird automatisch wieder gewählt, wenn die programmierten Dauer t nach dem Schaltsignal HS oder RS abgelaufen ist und sowohl der Betrag der Querbeschleunigung unterhalb eines vorgegebenen Grenzwertes liegt als auch kein Schubbetrieb herrscht. Wenn während der Dauer dieses kurzzeitigen Aufrufes der zweiten, vom Fahrer beeinflussten Betriebsart ein Signal kd eines Kick-down-Schalters 16 anliegt, wird sofort wieder die erste, automatische Betriebsart gewählt. Wird aber während des kurzzeitigen Aufrufes der zweiten, vom Fahrer beeinflussten Betriebsart Schubbetrieb erkannt oder überschreitet der Betrag der Querbeschleunigung den vorgegebenen Grenzwert, so ist über das Verzögerungsglied 34 sicher gestellt, dass dann, wenn ein Wechsel in die erste Betriebsart wieder möglich ist, die zweite Betriebsart erst nach Ablauf des Zeitraumes t2 verlassen werden kann.

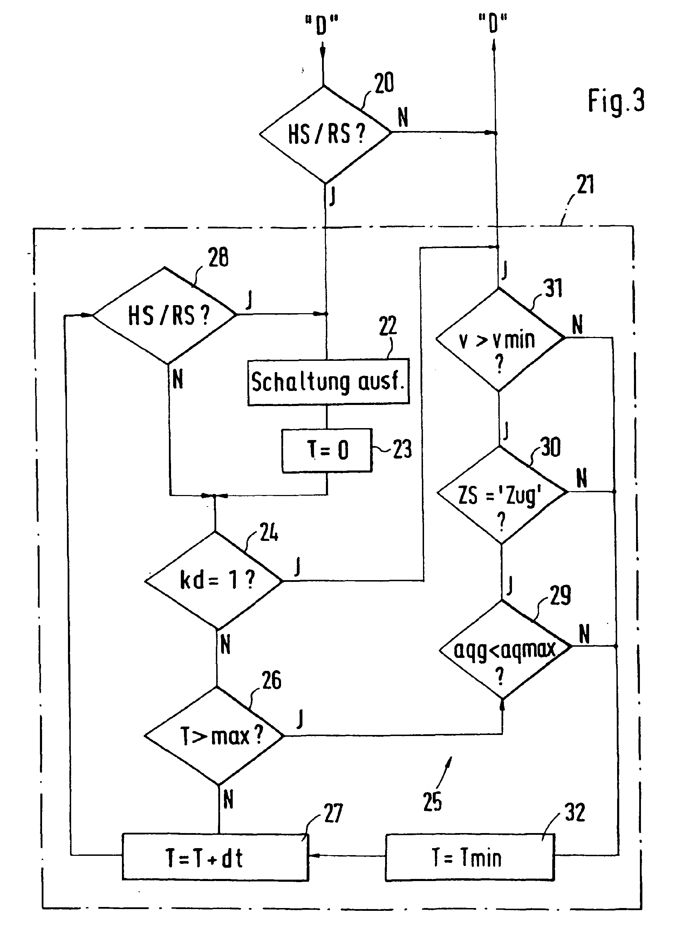

Die Steuervorrichtung 1 kann selbstverständlich auch in Form eines Mikrocomputers ausgeführt sein. Ein solcher Mikrocomputer arbeitet nach einem nach dem nachfolgend beschriebenen Verfahren erstellten Programm. Die Steuervorrichtung 1 steuert zunächst mit einer nicht dargestellten Gruppe von Schritten das Getriebe 2 in der ersten, automatischen Betriebsart an, indem es nach den Betriebsgrößen Drosselklappensignal a, Motordrehzahlsignal n und Fahrgeschwindigkeitssignal v mit Hilfe gespeicherter Kennfelder den einzulegenden Getriebegang bestimmt und eine Anforderung für diesen Getriebegang an das Getriebe 2 ausgibt. In einem Teil dieses Verfahrens wird das Signal der Wippe 4 abgefragt. Der in Fig. 3 dargestellte Schritt 20 ist Bestandteil dieser Abfrage. In Schritt 20 wird geprüft, ob mit der Schaltwippe 4 ein Hochschalt- oder ein Rückschaltsignal HS/RS abgegeben wurde. Ist dies nicht der Fall, so verbleibt die Steuervorrichtung 1 in ihrer automatischen Betriebsart, hier gekennzeichnet durch die Fahrstufe D. Liegt hingegen ein Hochschalt- oder Rückschaltsignal HS/RS an, so wird in das Programm zur manuellen Kurzzeitbeeinflussung 21 verzweigt.

Das Programm 21 beginnt in seinem ersten Schritt 22 mit der Ausführung der durch das Hochschalt- oder Rückschaltsignal HS/RS angeforderten Schaltung. Dieser erste Schritt 22 ist in einer alternativen Ausführung des Verfahrens nicht vorgesehen, wenn das Programm 21 durch ein erstes Hochschalt- oder Rückschaltsignal HS/RS zunächst lediglich aufgerufen werden soll, ohne dass sogleich eine Schaltung ausgeführt wird. Im nächsten Schritt 23 wird ein Zeitzähler T auf den Wert Null zurückgesetzt.

Im Schritt 24 wird ein Kick-down-Signal kd abgefragt. Liegt ein solches Signal vor, so wird seine Aufstiegsroutine 25 verzweigt. Anderenfalls wird das Programm mit Schritt 26 fortgesetzt, in dem überprüft wird, ob der Zähler T seinen Maximalwert - hier entsprechend einer Zeitdauer von 8 Sekunden - erreicht hat. Ist der Maximalwert erreicht oder überschritten, so wird ebenfalls zur Aufstiegsroutine 25 verzweigt und ansonsten das Programm mit Schritt 27 fortgesetzt, indem der Zeitzähler T um ein Zeitinkrement dT erhöht wird.

Im darauffolgenden Schritt 28 wird wiederum geprüft, ob ein Hochschalt- oder Rückschaltsignal HS/RS vorliegt. Ist dies der Fall, so wird der Programmablauf mit Schritt 22 fortgesetzt, während ansonsten direkt zu Schritt 24 verzweigt wird.

Die Ausstiegsroutine 25 besteht aus drei Prüfschritten 29 bis 31. Im ersten Prüfschritt 29 wird geprüft, ob das Signal aqg für die Querbeschleunigung des Fahrzeuges kleiner als ein voreingestellter Maximalwert aqmax ist. Im nächsten Schritt wird geprüft, ob das Signal ZS einen Zugbetrieb des Fahrzeuges anzeigt. Schließlich wird in Schritt 31 geprüft, ob die Fahrgeschwindigkeit v des Fahrzeuges größer als ein Minimalwert vmin von hier 5 km/h ist.

Sind die in den Schritten 29 bis 31 geprüften Bedingungen alle erfüllt, so wird das Programm 21 verlassen. Ist hingegen eine der drei Bedingungen nicht erfüllt, so wird in Schritt 32 der Zeitzähler T auf den Wert Tmin gesetzt, der im vorliegenden Beispiel eine Größe von 75% des in Schritt 26 geprüften Maximalwertes annimmt.

Zum Signal zs des Zug-Schub-Detektors 18 ist noch anzumerken, dass im vorliegenden Ausführungsbeispiel das Signal zs im Wert "Schub" dann annimmt, wenn das Fahrzeug steht oder mit geringer Geschwindigkeit (kleiner 5 km/h) rollt. Im normalen Fahrbetrieb hingegen wirkt das Signal zs in an sich bekannter Weise aus der Stellung der Drosselklappe DK oder mit alternativen Methoden bestimmt. Hiermit ergibt sich in den Schritten 30, 31 der Effekt, dass das Programm 21 bei stehendem oder rollendem Fahrzeug und nicht betätigtem Fahrpedal nicht verlassen werden kann. Damit ist es beispielsweise möglich, den ersten Gang als Anfahrgang durch eine Betätigung der Schaltwippe 4 auszuwählen, während in der Fahrstufe D in der automatischen Betriebsart regelmäßig der zweite Gang als Anfahrgang verwendet wird.

Es versteht sich, dass keine automatischen Schaltungen ausgeführt werden dürfen, solange das Programm 21 aktiv ist. Andere Sonderfunktionen, die in der Fahrstufe D vorgesehen sein können, werden beendet, wenn das Programm 21 ausgeführt wird. Von diesen anderen Programmen eingeleitete Schaltvorgänge werden jedoch noch beendet. Das Programm 21 hat somit Priorität gegenüber allen anderen Schaltprogrammen mit Ausnahme der Sicherheitsmaßnahmen, wie Überdrehschutz und Abwürgeschutz.

Anstelle von Gangstufen, denen bei einem stufenlosen Getriebe auch voreingestellte Übersetzungen entsprechen, tritt bei einem stufenlosen Getriebe die Übersetzung des Getriebes, die durch die Schaltwippe 4 vom Fahrer in der zweiten Betriebsart in Sinne einer Erhöhung oder einer Verminderung beeinflusst werden kann.

## Patentansprüche

1. Vorrichtung zum Steuern eines selbsttätig schaltenden Getriebes (2) für ein Fahrzeug, wobei eine das Getriebe (2) ansteuernde Steuervorrichtung (1) in zwei Betriebsarten betreibbar ist, nämlich in einer ersten, automatischen Betriebsart Übersetzungen (g) des Getriebes im wesentlichen selbsttätig nach von Gebern (5,6,7) bestimmten Betriebsgrößen einstellt und in einer zweiten, vom Fahrer beeinflussten Betriebsart Übersetzungen (g) des Getriebes im wesentlichen abhängig vom Signal einer zweiten Wähleinrichtung (4) einstellt, und die Auswahl der Betriebsart durch eine erste Wähleinrichtung (3) erfolgt, wobei die Steuervorrichtung aus der ersten Betriebsart heraus ohne Auswahl durch die erste Wähleinrichtung (3) durch Betätigung der zweiten Wähleinrichtung (4) für einen Zeitraum mit vorgegebener erster Zeitdauer (t) in die zweite Betriebsart umschaltbar ist, und wobei jedoch die zweite Betriebsart auch nach Verstreichen der vorgegebenen ersten Zeitdauer zumindest solange nicht verlassen wird, wie wenigstens eine der folgenden Fahrbedingungen erfüllt ist:
- ein Signal (aqg) eines Querbeschleunigungs-Grenzwertgebers (17) überschreitet einen voreingestellten Betrag, oder
- ein Signal (zs) des Zug-Schub-Detektors (18) zeigt Schubbetrieb an, oder
- eine Fahrgeschwindigkeit (v) ist kleiner als ein vorgegebener Grenzwert (vmin),
**dadurch gekennzeichnet, dass** der Zeitraum für einen weiteren Verbleib in der zweiten Betriebsart auf einen vorgegebenen Mindestwert (Tmin) jeweils für eine weitere Verweildauer gesetzt wird, wenn keine der Fahrbedingungen mehr erfüllt ist.

2. Vorrichtung nach Anspruch 1, **dadurch gekennzeichnet, dass** die Steuervorrichtung (1) eine Unterscheidungseinrichtung (10) aufweist, die Signale der Wähleinrichtungen (3,4) auswertet und daraufhin eine erste Übersetzungsbestimmungseinrichtung (8) für die erste, automatische Betriebsart oder die zweite Übersetzungsbestimmungseinrichtung (9) für die zweite, vom Fahrer beeinflusste Betriebsart aktiviert, wobei die Unterscheidungseinrichtung (10) eine erste und eine zweite Signalauswerteeinrichtung(11,12), eine Umschalteinrichtung (13) sowie ferner zur Überwachung des vorgegebenen Zeitraumes ein Zeitglied aufweist, das zwischen der zweiten Signalauswerteeinrichtung (12) und der Umschalteinrichtung (13) vorgesehen ist und auf ein Ausgangsignal der zweiten Signalauswerteeinrichtung (12) hin für die Dauer des vorgegebenen Zeitraumes ein Signal an die Umschalteinrichtung (13) abgibt, wobei das Zeitglied ein Signal (aqg) eines Querbeschleunigungs-Grenzwertgebers (17) und ein Signal (zs) eines Zug-Schub-Detektors (18) erhält und das Ausgangssignal des Zeitgliedes auf einen Mindestwert gesetzt wird, wenn das Signal (aqg) des Querbeschleunigungs-Grenzwertgebers (17) einen voreingestellten Betrag überschreitet oder das Signal (zs) des Zug-Schub-Detektors (18) einen Wechsel zum Schubbetrieb anzeigt.

3. Steuervorrichtung Anspruch 1 oder 2, **dadurch gekennzeichnet, dass** die Steuervorrichtung als Mikrocomputer ausgestaltet ist

4. Verfahren zum Steuern eines selbsttätig schaltenden Getriebes (2) für ein Fahrzeug, das eine das Getriebe ansteuernde Steuervorrichtung (1), zwei Wähleinrichtungen (3, 4) sowie Geber für Betriebsgrößen des Fahrzeuges (5, 6, 7) aufweist und das eine erste Gruppe von Schritten zur Durchführung einer ersten, automatischen Betriebsart nach Maßgabe der ersten Wähleinrichtung (3) und eine zweite Gruppe von Schritten (22) zur Durchführung einer zweiten, vom Fahrer beeinflussten Betriebsart nach Maßgabe der zweiten Wähleinrichtung (4) beinhaltet, wobei ein Wechsel mit vorgegebener erster Zeitdauer (t) von der ersten Gruppe zur zweiten Gruppe (21) von Schritten erfolgt, wenn eine Abfrage der zweiten Wähleinrichtung (4) ergibt, dass diese ein Signal (HS/RS) abgibt, und ein Wechsel von der zweiten Gruppe (21) zur ersten Gruppe durchgeführt wird, wenn eine vorbestimmte Verweilzeit in der zweiten Gruppe von Schriften (21) abgelaufen ist, wobei ein Wechsel von der zweiten Gruppe (21) zur ersten Gruppe auch nach Verstreichen der vorgegebenen ersten Zeitdauer zumindest solange unterbunden wird, wie wenigstens eine der folgenden Fahrbedingungen erfüllt ist:
- ein Signal (aqg) eines Querbeschleunigungs-Gebers (17) einen vorgegebenen Grenzwert (aqmax) überschreitet, oder
- ein Signal (zs) eines Zug-Schub-Detektors (18) Schubbetrieb anzeigt, oder
- ein Signal (v) für eine Fahrgeschwindigkeit des Fahrzeuges einen voreingestellten Grenzwert (vmin) unterschreitet,
**dadurch gekennzeichnet, dass** der Zeitraum für einen weiteren Verbleib in der zweiten Betriebsart auf einen vorgegebenen Mindestwert (Tmin) jeweils für eine weitere Verweildauer gesetzt wird, wenn keine der Fahrbedingungen mehr erfüllt ist.

## Claims

1. Device for controlling an automatically shifting gearbox (2) for a vehicle, with a control device (1) which actuates the gearbox (2) being operable in two operating modes, specifically setting transmission ratios (g) of the gearbox substantially automatically according to operating variables determined by transducers (5,6,7) in a first, automatic operating mode, and setting transmission ratios (g) of the gearbox substantially as a function of the signal of a second selector device (4) in a second, driver-influenced operating mode, and with the operating mode being selected by means of a first selector device (3), with the control device being switchable out of the first operating mode into the second operating mode, without selection by the first selector device (3), by actuating the second selector device (4) for a time period of a predefined first time duration (t), and with the second operating mode however not being departed from even after the predefined first time duration has elapsed at least for as long as at least one of the following driving conditions is met:
- a signal (aqg) of a lateral acceleration limit value transducer (17) exceeds a preset magnitude,
- a signal (zs) of the traction-overrun detector (18) indicates overrun operation, or
- a driving speed (v) is lower than a predefined limit value (vmin),
**characterized in that** the time period for continuing to remain in the second operating mode is set to a predefined minimum value (Tmin) in each case for a further residence duration if all of the driving conditions are no longer met.

2. Device according to Claim 1, **characterized in that** the control device (1) has a differentiating device (10) which evaluates signals of the selector devices (3, 4) and thereupon activates a first transmission ratio determining device (8) for the first, automatic operating mode or the second transmission ratio determining device (9) for the second, driver-influenced operating mode, with the differentiating device (10) having a first and a second signal evaluation device (11, 12), a switching device (13) and also a timing element for monitoring the predefined time period, which timing element is provided between the second signal evaluation device (12) and the switching device (13) and, in response to an output signal of the second signal evaluation device (12), outputs a signal to the switching device (13) for the duration of the predefined time period, with the timing element receiving a signal (aqg) from a lateral acceleration limit value transducer (17) and a signal (zs) from a traction-overrun detector (18), and with the output signal of the timing element being set to a minimum value if the signal (aqg) of the lateral acceleration limit value transducer (17) exceeds a preset magnitude or the signal (zs) of the traction-overrun detector (18) indicates a change to the overrun mode.

3. Control device according to Claim 1 or 2, **characterized in that** the control device is designed as a microcomputer.

4. Method for controlling an automatically shifting gearbox (2) for a vehicle, which gearbox has a control device (1) which actuates the gearbox, two selector devices (3, 4) and transducers for operating variables of the vehicle (5, 6, 7), and which method has a first group of steps for implementing a first, automatic operating mode in accordance with the first selector device (3) and a second group of steps (22) for implementing a second, driver-influenced operating mode in accordance with the second selector device (4), with a change, of a predefined first time duration (t), from the first group to the second group (21) of steps taking place if an interrogation of the second selector device (4) yields that the latter is outputting a signal (HS/RS), and with a change from the second group (21) to the first group being carried out if a predetermined residence time in the second group of steps (21) has expired, with a change from the second group (21) to the first group being prevented even after the predefined first time duration has elapsed at least for as long as at least one of the following driving conditions is met:
- a signal (aqg) of a lateral acceleration transducer (17) exceeds a predefined limit value (aqmax),
- a signal (zs) of a traction-overrun detector (18) indicates overrun operation, or
- a signal (v) for a driving speed of the vehicle falls below a preset limit value (vmin),
**characterized in that** the time period for continuing to remain in the second operating mode is set to a predefined minimum value (Tmin) in each case for a further residence duration if all of the driving conditions are no longer met.

## Revendications

1. Dispositif de commande d'une boîte de vitesses (2) à changement de rapport automatique pour un véhicule, un dispositif de commande (1) qui commande la boîte de vitesses (2) pouvant être utilisé dans deux modes de fonctionnement, à savoir dans un premier mode de fonctionnement automatique dans lequel il règle les rapports de démultiplication (g) de la boîte de vitesses pour l'essentiel automatiquement en fonction de grandeurs opérationnelles déterminées par des codeurs (5, 6, 7) et dans un deuxième mode de fonctionnement, influencé par le conducteur, dans lequel il règle les rapports de démultiplication (g) de la boîte de vitesses pour l'essentiel en fonction du signal d'un deuxième dispositif de sélection (4), et la sélection du mode de fonctionnement s'effectue par un premier dispositif de sélection (3), le dispositif de commande pouvant être permuté du premier mode de fonctionnement en le deuxième mode de fonctionnement sans sélection par le premier dispositif de sélection (3) en actionnant le deuxième dispositif de sélection (4) pendant une période ayant une première durée (t) prédéfinie, et le deuxième mode de fonctionnement étant tout de même maintenu même après écoulement de la première période prédéfinie au moins tant qu'au moins l'une des conditions de déplacement suivantes est remplie :
- un signal (aqg) d'un codeur de valeur limite d'accélération transversale (17) dépasse une valeur préréglée, ou
- un signal (zs) du détecteur de traction/propulsion (18) indique le mode propulsion, ou
- une vitesse de déplacement (v) est inférieure à une valeur limite (vmin) prédéfinie,
**caractérisé en ce que** la période pour un maintien supplémentaire dans le deuxième mode de fonctionnement est fixée à une valeur minimale (Tmin) prédéfinie à chaque fois pour une durée de séjour supplémentaire quand aucune des conditions de déplacement n'est plus remplie.

2. Dispositif selon la revendication 1, **caractérisé en ce que** le dispositif de commande (1) présente un dispositif de différenciation (10) qui interprète les signaux des dispositifs de sélection (3, 4) et active alors un premier dispositif de détermination du rapport de démultiplication (8) pour le premier mode de fonctionnement automatique ou le deuxième dispositif de détermination du rapport de démultiplication (9) pour le deuxième mode de fonctionnement influencé par le conducteur, le dispositif de différenciation (10) présentant un premier et un deuxième dispositif d'interprétation du signal (11, 12), un dispositif de permutation (13) et en plus, pour surveiller la période prédéfinie, un temporisateur qui est prévu entre le deuxième dispositif d'interprétation du signal (12) et le dispositif de permutation (13) et qui, en présence d'un signal de sortie du deuxième dispositif d'interprétation du signal (12), délivre à l'attention du dispositif de permutation (13) un signal pendant la durée de la période prédéfinie, le temporisateur recevant un signal (aqg) d'un codeur de valeur limite d'accélération transversale (17) et un signal (zs) d'un détecteur de traction/propulsion (18) et le signal de sortie du temporisateur étant fixé à une valeur minimale lorsque le signal (aqg) du codeur de valeur limite d'accélération transversale (17) dépasse une valeur préréglée ou le signal (zs) du détecteur de traction/propulsion (18) indique un passage au mode propulsion.

3. Dispositif de commande selon la revendication 1 ou 2, **caractérisé en ce que** le dispositif de commande est réalisé sous la forme d'un microordinateur.

4. Procédé de commande d'une boîte de vitesses (2) à changement de rapport automatique pour un véhicule, lequel présente un dispositif de commande (1) qui commande la boîte de vitesses, deux dispositifs de sélection (3, 4) ainsi que des codeurs pour les grandeurs opérationnelles du véhicule (5, 6, 7) et qui comprend un premier groupe d'étapes pour exécuter un premier mode de fonctionnement automatique d'après les indications du premier dispositif de sélection (3) et un deuxième groupe d'étapes (22) pour exécuter un deuxième mode de fonctionnement, influencé par le conducteur, d'après les indications du deuxième dispositif de sélection (4), un passage du premier groupe au deuxième groupe (21) d'étapes s'effectuant en une première période (t) prédéfinie lorsqu'une interrogation du deuxième dispositif de sélection (4) a pour résultat que celui-ci délivre un signal (HS/RS) et un passage du deuxième groupe (21) au premier groupe s'effectuant lorsqu'un temps de séjour prédéfini dans le deuxième groupe d'étapes (21) s'est écoulé, un passage du deuxième groupe (21) au premier groupe étant inhibé même après écoulement de la première période prédéfinie au moins tant qu'au moins l'une des conditions de déplacement suivantes est remplie :
- un signal (aqg) d'un codeur de valeur limite d'accélération transversale (17) dépasse une valeur limite prédéfinie (aqmax), ou
- un signal (zs) d'un détecteur de traction/propulsion (18) indique le mode propulsion, ou
- un signal (v) de vitesse de déplacement du véhicule est inférieur à une valeur limite (vmin) préréglée,
**caractérisé en ce que** la période pour un maintien supplémentaire dans le deuxième mode de fonctionnement est fixée à une valeur minimale (Tmin) prédéfinie à chaque fois pour une durée de séjour supplémentaire quand aucune des conditions de déplacement n'est plus remplie.
